# EUROPEAN PATENT APPLICATION

(11) **EP 2 595 105 A2**
(43) Date of publication of application: **22.05.2013**
(21) Application number: 12157606.0
(22) Date of filing: 29.02.2012
(51) Int. Cl.: G06Q 20/34

(54) **Electronic ticket system**

(30) Priority: 16.11.2011 TW 100141841
(71) Applicant: M-Media Co., Ltd., Taipei City 106 (TW)
(72) Inventor: Chen, Gi Gi, 106 Taipei City (TW)
(74) Representative: Baldwin, Mark

(57) **Abstract**

The present invention is related to an electronic ticket system, particularly to an electronic ticket system, which is able to use a variety of cards or tags, and is free from being misappropriated. A server is provided with a member platform, a member database, a ticket platform and a ticket database. The member database is used for storing account information of a plurality of members and a characteristic code corresponding to each account. The ticket platform provides the functions of sale and verification of each type of tickets. The ticket database is used for storing ticket information of a plurality of tickets and a characteristic code corresponding to each ticket. A ticket checking device is used by each service unit to read a characteristic code in a characteristic code carrier provided by the member, and then send it to the server to be contrasted with the ticket information and characteristic code stored in the ticket database. Moreover, the verification result is displayed on an indicator, and thereby whether the service corresponding to the ticket should be provided is determined.

## Description

### FIELD OF THE INVENTION

The present invention is relates to an electronic ticket system, particularly to an electronic ticket system, which is able to use a variety of cards or tags, and is free from being misappropriated.

### BACKGROUND

With the continuing popularity of Internet, a lot of goods and services may be ordered through the network. However, the current ticketing system still does not relieve the pain of being busy rushing about of the user.

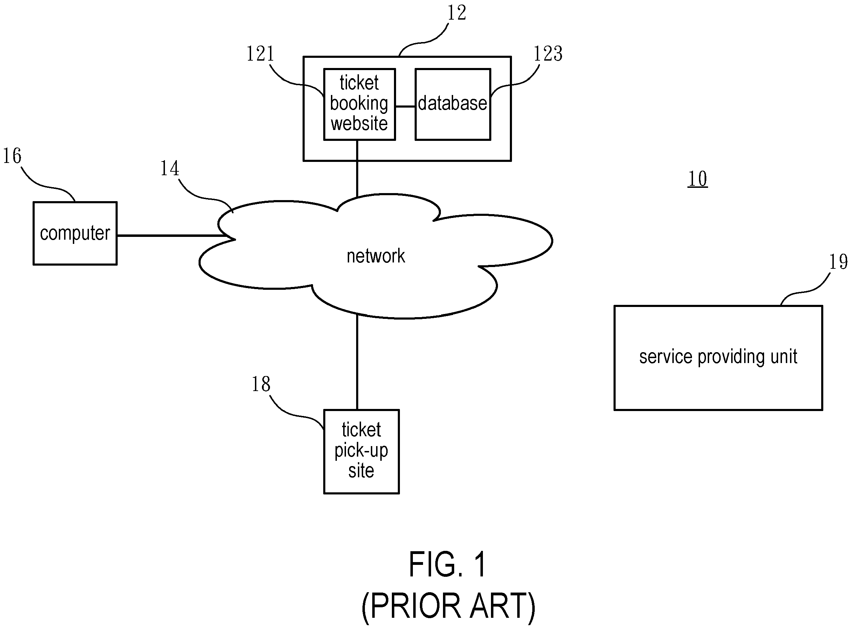

Referring to Fig. 1, there is illustrated a diagram showing a conventional ticketing system. In a ticketing system 10 in accordance with the prior art, a user uses a computer 16 to connect to a server 12 through a network 14. After entering into a ticket booking website 121, a ticket can be booked and purchased. When booking a ticket, the identification number is generally required for identifying the user identity. After the ticket booking and payment is completed, information of buyer and ticket is stored in a database 123 by the server 12. Afterward, the ticket buyer must go to a ticket pick-up site 18 connected with the server 12 in prescribed time duration, and show the ticket information and identification card, so as to pick up the purchased ticket. Finally, the purchased ticket is then exchanged for service at a corresponding service providing unit 19.

Although the pain due to lining up for purchasing ticket may be relieved for the user by means of such a ticketing system 10, it is still inconvenience for the user to take time to go to the ticket pick-up site 18 to pick up the ticket after internet ticket booking.

Some companies combine the ticketing system with mobile phones. In this system, the electronic ticket will be sent to the mobile phone of the ticket buyer after ticket booking is completed on the network. When the ticket buyer goes to the service providing unit, the corresponding service can be exchanged by showing the received electronic ticket on the mobile phone.

In this ticketing system, a particular encryption or special data format of the electronic ticket must be used for preventing the electronic ticket from being copied, forwarded or stolen. Correspondingly, a corresponding decoding program must be installed in the mobile phone of the ticket buyer, so as to display the electronic ticket on the screen of the mobile phone successfully. Currently, only a smart phone can be installed with a specific program by the user easily. The popularity of the system is limited significantly due to such a requirement, because the smart phone is a high-priced product, and thus not everyone can have one.

Furthermore, in the above ticketing system, if the ticket gets lost, no matter for an electronic ticket in a mobile phone, a paper ticket, or a card, it may be misappropriated. And the possible remedies are quite time consuming and troublesome.

### SUMMARY OF THE INVENTION

It is one object of the present invention to provide an electronic ticket system, particularly to an electronic ticket system, which is able to use a variety of cards or tags, and is free from being misappropriated.

It is a further object of the present invention to provide an electronic ticket system, wherein a server is provided with a ticket platform and a ticket database. A characteristic code is used to recognize the identity of member. After a ticket is purchased, the member carrying the characteristic code carrier to a service unit to exchange for a corresponding service after the ticket is checked.

It is a further object of the present invention to provide an electronic ticket system, wherein a member provides a characteristic code carrier and register the characteristic code stored in the characteristic code carrier in the system. And then, after each purchase of ticket, the member can use the characteristic code carrier to corresponding service station to exchange for service.

It is a further object of the present invention to provide an electronic ticket system, wherein the ticket checking device of each service unit is connected to the server, and is able to check tickets according to the ticket information and the characteristic code stored in the ticket database.

It is a further object of the present invention to provide an electronic ticket system, wherein the ticket is selectively one of a shopping voucher, a exchange certificate, a traffic ticket, an activity ticket, a sports ticket, a movie ticket, a concert ticket, a performance ticket, an exhibition ticket, a guild hall ticket, an amusement park ticket, an admission ticket, an invitation card, a food stamp, or a voucher for daily necessity.

It is a further object of the present invention to provide an electronic ticket system, wherein the ticket information of the ticket is sent to the corresponding member by means of one of short message, e-mail, post, printing and the combination thereof after the purchase of ticket is completed.

It is a further object of the present invention to provide an electronic ticket system, wherein the characteristic code carrier is selectively one of an IC card, a radio frequency identification card, a radio frequency identification tag, a bar code, a two-dimensional bar code, a quick response code, a magnetic stripe card or the combination thereof.

It is a further object of the present invention to provide an electronic ticket system, wherein the member code is selectively one of a national identity number, a phone number, a mobile phone number, an e-mail address, a business registration number, a user defined account, a specific account, a bar code and the combination thereof, used for the creation of account on the member platform.

It is a further object of the present invention to provide an electronic ticket system, wherein the characteristic code carrier is selectively one of an identification card, a health insurance card, an Easycard, an iCash card, a Taiwan Smart Card, an All-in-One Card, a credit card, a debit card, a cash card, a traffic card, an Octopus card or a member card.

The present invention provides an electronic ticket system comprising: a server provided with a member platform, a member database, a ticket platform and a ticket database, wherein said member platform provides the functions of creation and management of account, said member database is used for storing account information of a plurality of members and characteristic codes corresponding to each account, said ticket platform provides the functions of booking and verification of each type of tickets, said ticket database is used for storing ticket information of a plurality of tickets and characteristic codes corresponding to each ticket; a plurality of service units for providing service corresponding to each ticket, each service unit is provided with at least one ticket checking device connected to said server through a network, each ticket checking device comprises a characteristic code reader and an indicator; and a plurality of characteristic code carriers corresponding to each account, wherein each characteristic code carrier is stored with a characteristic code; wherein after the ticket is purchased by the member on said ticket platform, a relationship between said ticket and the characteristic code corresponding to said member is created by said ticket platform in said ticket database; said member carries the corresponding characteristic code carrier to the service unit, and has said characteristic code stored in the characteristic code carrier to be read by said characteristic code reader of said ticket checking device; said characteristic code is sent to said server by said ticket checking device and then contrasted with the ticket information and characteristic code stored in said ticket database, and then the service corresponding to said ticket is exchanged in accordance with verification result displayed on said indicator.

In one embodiment of the present invention, said ticket is selectively one of a shopping voucher, an exchange certificate, a coupon, a traffic ticket, an activity ticket, a sports ticket, a movie ticket, a concert ticket, a performance ticket, an exhibition ticket, a guild hall ticket, an amusement park ticket, an admission ticket, an invitation card, a food stamp, or a voucher for daily necessity.

In one embodiment of the present invention, said service unit is selectively one of a shop, a railroad/bus station, a dock, an airport, a movie theater, a concert hall, a performance hall, an exhibition hall, a guild hall, an amusement park, a conference hall or the combination thereof.

In one embodiment of the present invention, said ticket information is selectively one of a name of ticket, a company name, a name of service unit, a merchandise to be exchanged, an exchangeable amount, an expiry date, a date and time, a session, a number of runs, a location, a seat, points of departure and destination, a check-in time, a check-out time or the combination thereof.

In one embodiment of the present invention, said ticket information of said ticket is sent to a corresponding member by said ticket platform by means of one of short message, e-mail, post, printing and the combination thereof after a procedure of ticket purchasing is completed by the member on said ticket platform.

In one embodiment of the present invention, said indicator of said ticket checking device is selectively one of a soundindicator, a lightlight indicator, a display or a combination thereof.

In one embodiment of the present invention, said characteristic code carrier is selectively one of an IC card, a radio frequency identification (RFID) card, a RFID tag, a bar code, a two-dimensional bar code, a quick response code, a magnetic stripe card or the combination thereof.

In one embodiment of the present invention, said characteristic code reader is selectively one of an IC card reader, an RFID tag reader, a bar code reader, a two-dimensional bar code reader, a quick response code reader, a magnetic stripe card reader or the combination thereof.

In one embodiment of the present invention, a user can use an information device to connect to said server through said network, and create a member account on said member platform.

In one embodiment of the present invention, further comprises at least one characteristic code register connected to said server through said network, wherein said characteristic code register is provided with a characteristic code reader and a keyboard.

In one embodiment of the present invention, said characteristic code register is integrated into said ticket checking device.

In one embodiment of the present invention, a member code is used by a user for account creation on the member platform, said member code is selectively one of a national identity number, a passport number, a phone number, a mobile phone number, an e-mail address, a business registration number, a user defined account, a specific account, a bar code or the combination thereof.

In one embodiment of the present invention, a password of said account is sent to the member by said member platform by means of one of short message, e-mail, post, printing, sound or the combination thereof, when said account is created.

In one embodiment of the present invention, said characteristic code carrier is selectively one of an identification card, a health insurance card, an Easycard, an iCash card, a Taiwan Smart Card, an All-in-One Card, a credit card, a debit card, a cash card, a traffic card, an Octopus card and a member card.

In one embodiment of the present invention, a specific ticket can be issued to a member who meets a specific condition by said ticket platform automatically.

### BRIEF DESCRIPTION OF DRAWINGS

Fig. 1 is a diagram illustrating a conventional ticketing system.
Fig. 2 is a diagram illustrating one embodiment of the present invention.

### DETAILED DESCRIPTION

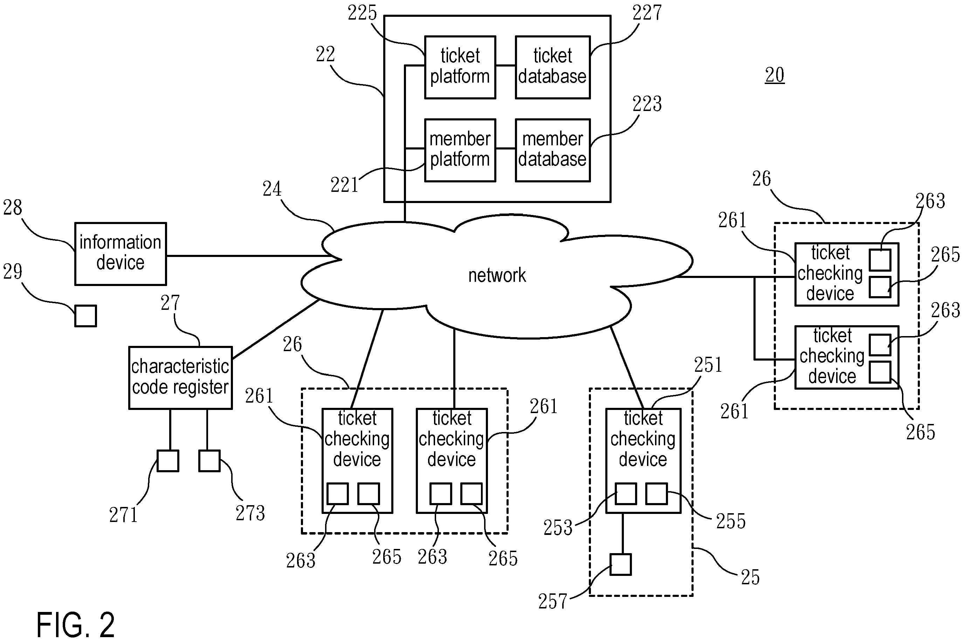

Referring to Fig. 2, there is shown a diagram illustrating an electronic ticket system according to one embodiment of the present invention. As illustrated in this figure, an electronic ticket system 20 of the present invention comprises a server 22, a plurality of service units 25, 26 and a plurality of characteristic code carriers 29.

Since a variety of cards or tags comprise a unique characteristic code, such as an IC card, a radio frequency identification card (RFID card) or other types of RFID tag, a bar code, a two-dimensional bar code, a quick response code (QR code) and a magnetic stripe card, it is possible for the present invention to use cards or tags owned by a user himself as the characteristic code carrier 29. The characteristic code stored in the characteristic code carrier 29 is served as a basis for identifying membership quickly. Naturally, a new characteristic code carrier 29 may be also provided by the system or shop, if it is required by a member.

The server 22 of the present invention is provided with a member platform 221, a member database 223, a ticket platform 225, and a ticket database 227. The member database 223 is used for storing account information of each member and characteristic codes corresponding to each member account. The member platform 221 provides the functions of creation and management of member account. The ticket database 227 is used for storing ticket information of each ticket and the corresponding characteristic code. The ticket platform 225 provides the functions of sale and verification of each type of tickets.

Each service unit 25, 26 is provided with at least one ticket checking device 251, 261, respectively. Each ticket checking device 251, 261, comprises a characteristic code reader 253, 263 and an indicator 255, 265, respectively. Each ticket checking device 25, 26 is connected to the server 22 through a network 24.

A member can use an information device 28 to connect to the server 22 through the network, and pick out and then purchase ticket as required on the ticket platform 225; or go to a service station with the electronic ticket system 20 of the present invention to purchase a ticket. After the ticket is purchased, the ticket platform 225 stores the characteristic code corresponding to the member in the ticket information corresponding to the purchased ticket in the ticket database 227, or creates relationship between the ticket and the characteristic code corresponding to the member.

After booking a ticket, the member carries the characteristic code carrier 29 to the corresponding service unit 25, 26. The characteristic code in the characteristic code carrier 29 is read by the characteristic code reader 253, 263 of the ticket checking device 251, 261, and is then sent to the server 22 for ticket checking. The ticket platform 225 contrasts the characteristic code with the ticket information in the ticket database 227. If the characteristic code is verified correct, the signal indicating correct is displayed on the indicator 255, 265, and the corresponding service can be exchanged. If the characteristic code is verified incorrect or service has been occupied, the signal indicating error or occupied is displayed on the indicator 255, 265, and the service can not be exchanged.

The electronic ticket system 20 of the present invention can be applied to the following tickets, such as a shopping voucher, an exchange certificate, a coupon, a traffic ticket, an activity ticket, a sports ticket, a movie ticket, a concert ticket, a performance ticket, an exhibition ticket, a guild hall ticket, an amusement park ticket, an admission ticket, an invitation card, a food stamp, or a voucher for daily necessity and so on, but not limited thereto. Most of the tickets are purchased by the members via the ticket platform 225, the relationship between ticket information and the characteristic code corresponding to the members is created in the ticket database 227, or the characteristic code corresponding to the members are stored in ticket information of the tickets directly.

For a part of tickets, a specific condition can be set in the system. When a member meets the condition, a specific ticket is sent to the member automatically. In this case, the specific condition is directed to the birthday of member, a consumption amount, some vocations and etc., while the specific ticket may be an exchange certificate, coupon, admission ticket, invitation card, a food stamp, or a voucher for daily necessity and so on.

The service unit 25, 26 of the present invention may be a site of facility for providing goods or service to be exchanged, such as a shop, a railroad/bus station, a dock, an airport, a movie theater, a concert hall, a performance hall, an exhibition hall, a guild hall, an amusement park, a conference hall and etc. Each service unit 25, 26 is provided with one or more ticket checking devices 251, 261. Only one ticket checking device 251 is required for the service unit 25 having one single window or one single gate. And a corresponding number of ticket checking devices 261 may be provided for the service unit 26 having a plurality of windows or several gates.

In one embodiment of the present invention, each indicator 255, 265 of the ticket checking device 251, 261 is selectively one of a sound indicator, a light indicator, a display or the combination thereof, wherein the result of ticket checking may be expressed in the form of different sounds, colors of light signals, and words or symbols, respectively. If the display is included, the related ticket information can be further displayed for facilitating the service unit 25, 26 to provide correct service.

After the purchase of ticket is completed by the member or the specific ticket is sent to the member, ticket information corresponding to the ticket is sent to the member by the ticket platform 225 via one of short message, e-mail, post, printing or the combination thereof for reference, so as to prevent the member from forgetting or confusing the ticket information after a long period of time. The ticket information of each ticket may be different among each other owing to different types of ticket. The ticket information can be selectively one of the name of ticket, the company name, the name of service unit, the merchandise to be exchanged, the exchangeable amount, the expiry date, the date and time, the session, the number of runs, the location, the seat, the points of departure and destination, the check-in time, the check-out time or the combination thereof.

In one embodiment of the present invention, the electronic ticket system 20 further comprises at least one characteristic code register 27. Each characteristic code register 27 is provided with a characteristic code reader 271 and a keyboard 273. When a user desires to apply for membership of the electronic ticket system 20 of the present invention, he/she can make an application at a site where the characteristic code register 27 is provided. Firstly, the user should select the function of account creation, and input a member code via the keyboard 273. Subsequently, the user should provide a characteristic code carrier 29 for the characteristic code reader 271 to read out a characteristic code. Thereby, an account is then created on the member platform 221 of the server 22.

A password of the account is sent to the member by means of short message, e-mail, post, printing or voice selectively by the member platform 221 after the account is created. Alternatively, the member is requested to input and then confirm the password via the keyboard 273 directly.

A user can also use an information device 28 (such as a computer, a notebook, a smart phone, a tablet personal computer, an iPad, a personal digital assistant and etc.) to connect to the server 22 through the network 24. After selecting the function of account creation on the member platform 221, the user can input a member code to create an account. After the account is created, a password of the account will be sent to the member by means of short message, e-mail, post, printing or voice by the member platform 221. After the above steps are completed, the member should go to the site where the characteristic code register 27 is provided, input the member code and the password via the keyboard 273, and provide a characteristic code carrier 29 having a characteristic code to be read by the characteristic code reader 271. And then the characteristic code will be stored in the member database 223, and the procedure of account creation is then complete.

After the member account is created, the member can use an information device 28, such as a computer, a notebook, a smart phone, a tablet personal computer, an iPad, a personal digital assistant and etc., to connect to the server 22 through the network 24, and then log in the account with a corresponding password. Thereby, the activities, such as account management, consumption inquiry, changing or stopping of characteristic code carrier 29, reporting the loss of characteristic code carrier 29 and etc., can be conducted.

In one embodiment of the present invention, the ticket checking device 251 is further provided with a keyboard 257. In such a way, the function of characteristic code register can be integrated into the ticket checking device 251.

In case of the characteristic code carrier 29 being broken or lost, the member can go to the site where the characteristic code register 27 or the ticket checking device 251 having the function of register, select the function of reporting the loss of characteristic code carrier 29 or changing of characteristic code carrier 29, and input the member code and the password, and then the old characteristic code carrier will be stopped. After a new characteristic code carrier 29 is provided, and the new characteristic code is read by the characteristic code reader 271, the process of changing card is then completed.

In one embodiment of the present invention, the member code is selectively one of a national identity number, a passport number, a phone number, a mobile phone number, an e-mail address, a business registration number, a user defined account, a specific account, a bar code and the combination thereof. For the creation of account, any one of the IC cards, any one of the RFID cards, an RFID tag, a bar code, a two-dimensional bar code, a QR code or a magnetic stripe card owned by the user himself can be used as the characteristic code carrier, such as current identification card, health insurance card, Easycard, iCash card, Taiwan Smart Card, All-in-One Card, credit card, debit card, cash card, traffic card, Octopus card, member card, other types of carriers having characteristic codes therein and etc.. A characteristic code carrier may be provided by the system or service unit, if no appropriate characteristic code carrier is provided by a user himself. The service unit 26 and the characteristic code register 27 of the present invention is provided with a corresponding IC card reader, RFID tag reader, bar code reader, two-dimensional bar code reader, QR code reader, magnetic stripe card reader and etc, thereby the characteristic code of the corresponding characteristic code carrier 29 can be read.

The electronic ticket system 20 of the present invention can be further applied to the issue of social welfare or relief, such as food stamps, vouchers for daily necessities and etc. By setting a specific condition in the server 22, the food stamps or vouchers for daily necessities can be issued to the member who meets the specific condition by the ticket platform 225 automatically. After the ticket information sent from the ticket platform 225 is received, the member who meets a specific condition can take the characteristic code carrier 29 to the corresponding service unit 25 to exchange for food or daily necessities.

In one embodiment of the present invention, a keyboard 257 is further provided to the ticket checking device 251 for ensuring the safety of exchange for a part of tickets and service. When the member takes the characteristic code carrier 29 to the service unit 25 to exchange service, in addition to provide the characteristic code carrier 29 for the characteristic code reader 253 to read the characteristic code, it is necessary for the member to input a correct password via the keyboard 257 for completing the procedure of service exchange. The effect of dual certification is achieved by means of contrast with characteristic code and confirmation of password.

By using the electronic ticket system 20 of the present invention, the effects of energy saving and carbon-reducing are obtained. In the present invention, each type of tickets belonging to the member is ensured, and is free from being misappropriated and skimmed. If the characteristic code carrier 29 of the member is lost and then misappropriated after loss reporting procedure is completed, the characteristic code carrier 29 may be displayed as a lost property on the ticket checking device 25, 26. Thus, illegality may be stopped on the spot, or transferred to the related agency.

The foregoing description is merely one embodiment of the present invention and not considered as restrictive. All equivalent variations and modifications in shape, structure, feature, and spirit in accordance with the appended claims may be made without in any way from the scope of the invention.

## Claims

1. An electronic ticket system comprising:
a server provided with a member platform, a member database, a ticket platform and a ticket database, wherein said member platform provides the functions of creation and management of account, said member database is used for storing account information of a plurality of members and characteristic codes corresponding to each account, said ticket platform provides the functions of booking and verification of each type of tickets, said ticket database is used for storing ticket information of a plurality of tickets and characteristic codes corresponding to each ticket;
a plurality of service units for providing service corresponding to each ticket, each service unit is provided with at least one ticket checking device connected to said server through a network, each ticket checking device comprises a characteristic code reader and an indicator; and
a plurality of characteristic code carriers corresponding to each account, wherein each characteristic code carrier is stored with a characteristic code;
wherein after the ticket is purchased by the member on said ticket platform, a relationship between said ticket and the characteristic code corresponding to said member is created by said ticket platform in said ticket database; said member carries the corresponding characteristic code carrier to the service unit, and has said characteristic code stored in the characteristic code carrier to be read by said characteristic code reader of said ticket checking device; said characteristic code is sent to said server by said ticket checking device and then contrasted with the ticket information and characteristic code stored in said ticket database, and then the service corresponding to said ticket is exchanged in accordance with verification result displayed on saidindicator.

2. The electronic ticket system according to Claim 1, wherein said ticket is any one of a shopping voucher, an exchange certificate, a coupon, a traffic ticket, an activity ticket, a sports ticket, a movie ticket, a concert ticket, a performance ticket, an exhibition ticket, a guild hall ticket, an amusement park ticket, an admission ticket, an invitation card, a food stamp, or a voucher for daily necessity.

3. The electronic ticket system according to Claim 1 or 2, wherein said service unit is any one of a shop, a railroad/bus station, a dock, an airport, a movie theater, a concert hall, a performance hall, an exhibition hall, a guild hall, an amusement park, a conference hall or a combination thereof.

4. The electronic ticket system according to Claim 1, 2 or 3, wherein said ticket information is selectively one of a name of ticket, a company name, a name of service unit, a merchandise to be exchanged, an exchangeable amount, an expiry date, a date and time, a session, a number of runs, a location, a seat, points of departure and destination, a check-in time, a check-out time or a combination thereof.

5. The electronic ticket system according to any one of the preceding Claims, wherein said ticket information of said ticket is sent to a corresponding member by said ticket platform by means of one of short message, e-mail, post, printing and the combination thereof after a procedure of ticket purchasing is completed by the member on said ticket platform.

6. The electronic ticket system according to any one of the preceding Claims, wherein said indicator of said ticket checking device is any one of a sound indicator, a light indicator, a display or a combination thereof.

7. The electronic ticket system according to any one of the preceding Claims, wherein said characteristic code carrier is any one of an IC card, a radio frequency identification (RFID) card, a RFID tag, a bar code, a two-dimensional bar code, a quick response code, a magnetic stripe card or a combination thereof.

8. The electronic ticket system according to any one of the preceding Claims, wherein said characteristic code reader is any one of an IC card reader, an RFID tag reader, a bar code reader, a two-dimensional bar code reader, a quick response code reader, a magnetic stripe card reader or a combination thereof.

9. The electronic ticket system according to any one of the preceding Claims, wherein a user can use an information device to connect to said server through said network, and create a member account on said member platform.

10. The electronic ticket system according to any one of the preceding Claims, further comprising at least one characteristic code register connected to said server through said network, wherein said characteristic code register is provided with a characteristic code reader and a keyboard.

11. The electronic ticket system according to Claim 10, wherein said characteristic code register is integrated into said ticket checking device.

12. The electronic ticket system according to any one of the preceding Claims, wherein a member code is used by a user for account creation on the member platform, said member code is any one of a national identity number, a passport number, a phone number, a mobile phone number, an e-mail address, a business registration number, a user defined account, a specific account, a bar code or a combination thereof.

13. The electronic ticket system according to Claim 12, wherein a password of said account is sent to the member by said member platform by means of one of short message, e-mail, post, printing, sound or a combination thereof, when said account is created.

14. The electronic ticket system according to any one of the preceding Claims, wherein said characteristic code carrier is any one of an identification card, a health insurance card, an Easycard, an iCash card, a Taiwan Smart Card, an All-in-One Card, a credit card, a debit card, a cash card, a traffic card, an Octopus card and a member card.

15. The electronic ticket system according to any one of the preceding Claims, wherein a specific ticket can be issued automatically by said ticket platform to a member who meets a specific condition.
